# EUROPEAN PATENT SPECIFICATION

(11) **EP 2 743 289 B1**
(45) Date of publication and mention of the grant of the patent: **23.01.2019**
(21) Application number: 13187443.0
(22) Date of filing: 04.10.2013
(51) Int. Cl.: C08J 3/00

(54) **Method for perfuming a plastic element**
Verfahren zur Parfümierung eines Kunststoffelementes
Procédé pour parfumer un élément en matière plastique

(30) Priority: 12.12.2012 BE 201200841
(43) Date of publication of application: 18.06.2014
(73) Proprietor: Michael Pitt V.O.F., 2950 Kapellen (BE)
(72) Inventor: Vandeputte, Bart Piet Jozef, 2950 Kapellen (BE)
(74) Representative: Philippaerts, Yannick

(56) References cited:
- WO-A1-2007/030511

## Description

The invention relates to a method for perfuming a plastic element such as a plastic component of a pair of glasses.

Perfume typically has the purpose and is worn to give off a pleasant scent to other people. The intensity of the scent is important here in the scent being perceived as pleasant. If too much perfume is applied, the intensity of the scent will be perceived by many as too intense, at least during the first hours following application. The perfume in this way fails to achieve its purpose. If the intensity of the perfume is too low, other people can no longer smell it and the perfume will not make a positive impression. Here too the perfume fails to achieve its purpose.

In WO2007030511 perfumes are compounded during processing in order to obtain perfumed plastic elements. It is an object of this invention to provide a method with which perfume can be given off with a constant scent intensity.

The invention provides for this purpose a method for perfuming a plastic element as defined in the claims.

Via the method as proposed above a pair of glasses is obtained to which the perfume has been applied in a particular manner. When these glasses are worn by a person, this person also wears the perfume. The manner of applying the perfume to the pair of glasses according to the invention has the effect that the perfume gives off a scent over a long period of time (period of several months). Tests have shown that heating plastic causes the plastic to expand, whereby scent molecules have more space to penetrate into the plastic. More than a superficial layer of perfume is hereby provided at the surface, and the perfume is absorbed into the plastic structure just as a sponge can absorb water. When the plastic cools and thereby regains its original shape and strength, the scent molecules migrate through the plastic to the surface and are there given off. Tests have shown that this process takes place slowly and at a constant speed, with the result that a constant emission of scent takes place. A scent with a constant intensity is hereby also obtained. It will be apparent that, in addition to glasses, other plastic elements can also be provided with a scent, with the same effects and advantages as described above with reference to the example of the pair of glasses.

The lenses are preferably removed from the spectacle frame before heating of the portion of the plastic components of the pair of glasses. Damage to the lenses can be prevented by removing the lenses from the spectacle frame. If the lenses are heated expansion of the lenses and/or of the spectacle frame and/or the difference in expansion between the two may cause the lenses to crack. Scent molecules from the perfume may also react with a coating applied to the lenses, whereby the coating is adversely affected. Removing the lenses prevents such damage.

The plastic components are preferably heated to a temperature of more than 60°C, preferably more than 80°C, more preferably more than 100°C, and less than 300°C, preferably less than 200°C, more preferably less than 150°C. Tests have shown that such temperatures are suitable for producing optimal effects from the invention. The chosen temperature is however preferably lower here than the melting temperature of the plastic, since the plastic will lose its shape above the melting temperature of the plastic.

The plastic components are preferably thermoplastic and are heated to a temperature lying below the melting temperature of the plastic and within 50°C thereof, preferably within 30°C thereof. By being heated to a temperature below the melting temperature the plastic components retain their shape. This is because bonds between the molecules are not broken to any noticeable extent below the melting temperature. By heating to a temperature below the melting temperature but still close to the melting temperature (within 50°C or within 30°C), the bonds do become looser because intermolecular interactions decrease. When the intermolecular interactions are less strong this gives scent molecules the opportunity to penetrate between the plastic molecules in order to thus achieve a deep absorption of the fragrance into the plastic. Because the plastic bonds are not broken, no chemical reaction of note will take place between the plastic molecules and the scent molecules. Both the scent and the plastic hereby remain intact.

The plastic components are preferably heated to a temperature lying between the transition temperature and the melting temperature, more preferably lying halfway between the transition temperature and the melting temperature. The transition temperature is the temperature at which the plastic bonds become looser. The bonds typically become gradually looser between the transition temperature and the melting temperature of the plastic. The temperature for heating of the plastic components therefore preferably lies roughly halfway between the transition temperature and the melting temperature. The reason for this is that closer to the transition temperature the plastic bonds are not yet very loose, while closer to the melting temperature there is the risk of chemical reactions because plastic bonds are already breaking. The portion of the plastic components of the pair of glasses is preferably isolated from the rest of the glasses before heating, and placed in an oven. Isolating the components which are heated from the rest enables these components to be heated in efficient manner without the heating having an adverse effect on the rest of the glasses.

The application step is preferably performed by evaporating the perfume in the oven. Evaporating the perfume in the oven enables it to be applied uniformly to the pair of glasses. Through the evaporation in the oven the perfume can further be applied in a controlled manner, whereby only a minimal quantity of perfume is lost. When perfume is evaporated the scent molecules dissolve in the air, and a film is not formed on the outer side of the heated plastic element. This film could result if the perfume is applied to the element in liquid state (not dissolved in the air).

Alternatively, the application step is performed by atomizing the perfume onto the heated portion of the plastic element. The perfume can be heated here before the atomizing. The perfume is more preferably atomized in the oven. Atomizing the perfume in the oven enables it to be applied at the moment that the heated components of the pair of glasses reach their ideal temperature. Atomizing in the oven further enables the perfume to be applied in a controlled and targeted manner, whereby only a minimal quantity of perfume is lost.

The invention further relates to a perfumed pair of glasses obtained by performing the method according to the claims.

The set of an oven and an evaporator for the purpose of perfuming a pair of glasses comprising plastic components, has a heatable cavity in which at least a portion of the plastic components can be placed and wherein the evaporator is provided for the purpose of applying perfume to the heated portion of the plastic components. Such a set therefore enables application of the method according to the invention.

The evaporator is preferably built into the oven to enable evaporation of the perfume in the cavity. Such a construction in which the evaporator is incorporated into the oven facilitates the process of the invention.

The oven preferably comprises one or more openings so that a pair of glasses can extend through the openings for the purpose of placing a portion of the plastic components in the cavity, while a further portion of the pair of glasses extends outside the cavity. Portions of components of the pair of glasses can in this way be isolated in simple manner in the oven. This allows application of perfume at predetermined positions to the pair of glasses or to predetermined portions of components of the glasses. A pair of glasses can thus be provided with perfume at the position of the ears, while the part of the frame which supports the lenses, the frontal section, carries no perfume.

The invention will now be further described on the basis of an exemplary embodiment shown in the drawing.

In the drawings:
figure 1 shows a pair of glasses according to the invention;
figure 2 shows a set of an oven and atomizer and
figure 3 shows an oven with integrated evaporators according to a preferred embodiment of the invention.

The same or similar elements are designated in the drawing with the same reference numerals.

The invention is elucidated in this description on the basis of a specific example, this being a pair of glasses comprising plastic components. The invention is hereby described in concise and clear manner. It will however be apparent that this is only an example of application of the invention, and that plastic components of a pair of glasses are only an example of plastic elements which can be treated according to the invention. Other examples of applications of the invention are:
- Plastic bottles with odourless content, wherein a commercial scent is nevertheless applied to the bottle;
- Plastic posts with an odour which repels particular animals, so that they relieve themselves elsewhere;
- A range of plastic bottles to which, depending on the content, a determined standard scent is applied, making it easily recognizable for the blind (e.g. a cow scent for milk bottles..);
- Frames, sunglasses with perfume;
- Toilet seat with pleasant scent;
- Hazardous products in a bottle/can with repellent odour so that children do not reach for it, or as a warning to adults;
- Commercial perfume sticks which can be distributed as gadget at events, e.g. to promote new perfumes; and
- Scented posts for the blind, to indicate crossings.

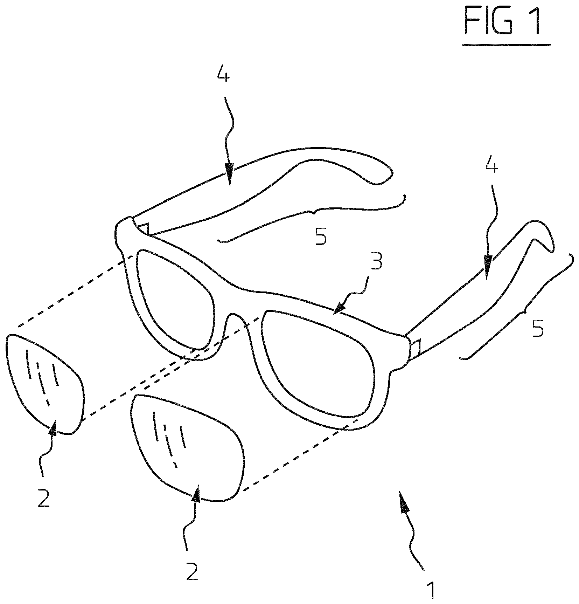

Figure 1 shows a pair of glasses 1. The pair of glasses 1 has two lenses 2 received in the frontal section of spectacle frame 3. The pair of glasses further comprises two sidepieces 4. The frontal frame 3 and sidepieces 4 can be manufactured from different types of material, including plastic. The invention is particularly applicable to a pair of glasses comprising plastic components. A pair of glasses can thus be manufactured wherein the frontal frame 3 is manufactured from metal, while sidepieces 4 are manufactured from plastic. Alternatively, a metal frame can be provided with plastic decorative elements at the position of sidepieces 4.

Plastic typically has a transition temperature and a melting temperature. The transition temperature is typically several tens of degrees lower than the melting temperature. Melting temperature is the temperature at which the plastic melts, i.e. the plastic bonds break such that the molecules flow relative to each other. The transition temperature is the temperature at which the bonds between the plastic molecules become looser because the strength of intermolecular interactions decreases. When plastic is heated to a temperature lying between the transition temperature and the melting temperature it becomes possible for external molecules to penetrate into the plastic without the plastic losing its shape.

Perfume comprises scent molecules which gradually evaporate and thus give off a scent in the surrounding area. Because the molecules evaporate, the scent will become discernible.

When perfume is applied to a surface it typically evaporates from this surface so as to thus give off scent. This evaporation typically takes place at a decreasing speed, wherein a large amount of fragrance is emitted during a first time period, whereby the scent is intense, and wherein less fragrance is emitted during a subsequent time period, so with less intensity. This degressive manner of perfume emission has the result that the scent could be perceived as being too intense during a first time period, while the scent is perceived as being less readily discernible during a further time period. Neither case is optimal.

By applying the perfume to the plastic of the pair of glasses 1 after this plastic has been heated to a temperature lying between the transition temperature and the melting temperature, the scent molecules penetrate into the plastic so that more than just a surface of the pair of glasses is provided with perfume. This is similar to water being applied to a sponge, wherein the water is absorbed into the pores of the sponge. The scent molecules are thus absorbed between the plastic molecules and plastic bonds. The result is an emission of fragrance with a duration many times longer than if the perfume is applied only to a surface. A pair of glasses provided with perfume in such a manner can emit scent for several months. A further effect is that the emission speed is relatively constant. The scent molecules move through the "cooled" plastic components and so migrate outward. This migration process takes place at a relatively constant speed, whereby a constant quantity of scent molecules is emitted by the pair of glasses. This results in a constant scent intensity. This intensity may perhaps decrease over time, but where the intensity of a perfume applied to a surface decreases from a maximum to a minimum over several days, when perfume is applied according to the method of the invention the intensity will decrease from a maximum to a minimum over several months. When the change in intensity is considered over a time period of one day, it will be very great in the case of perfume applied to a surface, and hardly noticeable in the case of a perfume applied according to the invention.

The perfume can be applied to the whole frame of the pair of glasses 1, this being the frontal frame 3 and sidepieces 4. Alternatively, only sidepieces 4 can be provided with perfume. As a further alternative a selected zone 5 of sidepieces 4 or of frontal frame 3 can be provided with perfume via the method of the invention.

Before the perfume is applied to the pair of glasses 1, the zone where the perfume is applied is preferably isolated. Lenses 2 are typically also removed from frame 3 in order to prevent damage to the lenses due to heating or the perfume.

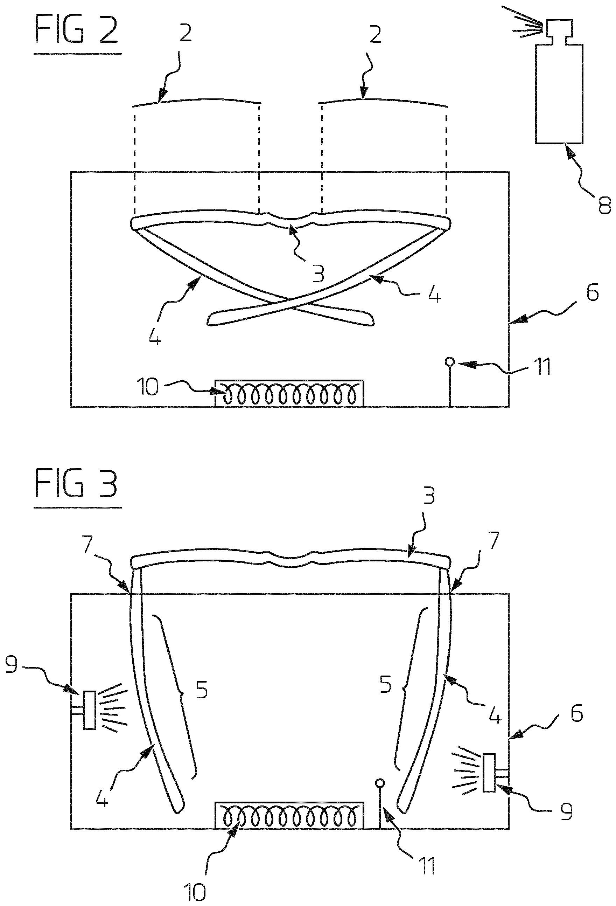

Figure 2 shows a first embodiment of a set of an oven 6 and an atomizer 8 with which a pair of glasses 1 can be provided with a perfume in accordance with a method according to the invention. The figure shows how oven 6 encloses the whole spectacle frame (frontal frame 3 and sidepieces 4). Lenses 2 are removed from the spectacle frame before spectacle frame 3 is placed in oven 6. The oven further comprises heating means 10 for bringing the oven to temperature. Spectacle frame 3, 4 is hereby also heated. The oven typically also comprises a temperature sensor 11 with which the temperature in oven 6 can be monitored and controlled. The atomizer 8 with which the perfume is applied to the plastic components is shown externally in figure 2. Using the set of figure 2 the pair of glasses (without lenses 2) is heated in the oven to the predetermined temperature (between transition temperature and melting temperature) of the plastic, after which the heated frame is removed from the oven and atomized with the perfume via atomizer 8. The spectacle frame can then cool to room temperature. Once the spectacle frame has cooled, lenses 2 can be refitted.

Figure 3 shows an alternative oven 6, wherein an evaporator 9 is built into the oven in order to evaporate the perfume in the oven and thus apply it via the air to the components of the pair of glasses 1. Oven 6 of figure 3 comprises openings 7 through which the pair of glasses can extend. In figure 3 two sidepieces 4 of the pair of glasses 1 extend through respective openings 7 in a side wall of oven 6. A predetermined zone 5 of sidepieces 4 hereby comes to lie in the cavity of oven 6 so that these zones 5 can be heated in oven 6. Frontal frame 3 and a first portion of sidepieces 4 extend outside oven 6. Via such an oven it is not necessary to remove lenses 2 from frontal frame 3, since the frontal section of frame 3 is not heated in the oven.

During use of the oven of figure 3 the zones 5 of sidepieces 4 are first heated to the predetermined temperature, after which evaporators 9 in oven 6 are activated in order to evaporate perfume in the oven and thus apply the perfume to zones 5 of the pair of glasses 1. Alternatively, evaporator 9 can also be activated sooner so that the perfume (in liquid form) can be heated together with the plastic element and in this way also evaporates in the oven. The time the heated object spends in the oven with evaporated perfume can here determine the quantity of scent applied. This time can then be predetermined in accordance with the desired scent intensity of the pair of glasses. The oven of figure 3 also comprises a heating element 10 and a temperature sensor 11 for the purpose of monitoring the heat in oven 6. Because evaporators 9 are in the oven, the temperature of zones 5 can be precisely determined at the moment the perfume is applied. Because in the oven according to figure 2 the pair of glasses 1 is taken out of the oven and only then atomized with the perfume via atomizer 8, the temperature of the pair of glasses will already have decreased relative to the temperature of oven 6. The temperature during atomizing of perfume 8 will be less precise when making use of the set of figure 2.

The above description and the accompanying figures show examples of a perfumed pair of glasses made according to the invention. These examples must not be interpreted as being limitative for the invention. The scope of protection is defined by the claims, of which these examples form only several exemplary embodiments.

## Claims

1. Method for perfuming a plastic element, wherein the method comprises the following successive steps of:
- heating at least a portion of the plastic element in an oven to a temperature of more than 60 degrees Celsius;
- applying a perfume to the heated portion of the plastic element;
- cooling the heated portion of the plastic element.

2. Method as claimed in claim 1, wherein the plastic element is a component of a pair of glasses.

3. Method as claimed in claim 2, wherein the lenses are removed from the spectacle frame before the heating step.

4. Method as claimed in any of the foregoing claims, wherein the plastic element is heated to a temperature of more preferably more than 80 degrees Celsius, more preferably more than 100 degrees Celsius, and less than 300 degrees Celsius, preferably less than 200 degrees Celsius, more preferably less than 150 degrees Celsius.

5. Method as claimed in any of the claims 1 to 3, wherein the plastic element is thermoplastic and is heated to a temperature lying below the melting temperature of the plastic and within 50 degrees Celsius thereof, preferably within 30 degrees Celsius thereof.

6. Method as claimed in any of the claims 1 to 3, wherein the plastic element is heated to a temperature lying between the transition temperature and the melting temperature.

7. Method as claimed in claim 6, wherein said temperature lies roughly halfway between the transition temperature and the melting temperature.

8. Method as claimed in any of the foregoing claims, wherein the application step is performed by evaporating the perfume in the oven.

9. Method as claimed in any of the claims 1 to 7, wherein the application step is performed by atomizing the perfume onto the heated portion of the plastic element.

10. Method as claimed in any of the foregoing claims, wherein the portion of the plastic element is isolated from the rest of the element before heating, and placed in an oven.

## Patentansprüche

1. Verfahren zur Parfümierung eines Plastikelements, wobei das Verfahren die folgenden aufeinanderfolgenden Schritte umfasst:
- Erwärmung zumindest eines Teiles des Plastikelements in einem Ofen auf eine Temperatur von mehr als 60 Grad Celsius;
- Auftragen eines Parfüms auf den erwärmten Teil des Plastikelements;
- Abkühlen des erwärmten Teils des Plastikelements.

2. Verfahren wie in Anspruch 1 beansprucht, wobei das Plastikelement eine Komponente einer Brille ist.

3. Verfahren wie in Anspruch 2 beansprucht, wobei die Linsen aus dem Brillengestell vor dem Erwärmungsschritt entfernt werden.

4. Verfahren wie in einem der vorhergehenden Ansprüche beansprucht, wobei das Plastikelement auf eine Temperatur von bevorzugt mehr als 80 Grad Celsius, besonders bevorzugt mehr als 100 Grad Celsius, und weniger als 300 Grad Celsius, bevorzugt weniger als 200 Grad Celsius, besonders bevorzugt weniger als 150 Grad Celsius erwärmt wird.

5. Verfahren wie in einem der Ansprüche 1 bis 3 beansprucht, wobei das Plastikelement thermoplastisch ist und auf eine Temperatur, welche unter der Schmelztemperatur des Plastiks und innerhalb von 50 Grad Celsius davon, bevorzugt innerhalb von 30 Grad Celsius davon liegt, erwärmt wird.

6. Verfahren wie in einem der Ansprüche 1 bis 3 beansprucht, wobei das Plastikelement auf eine Temperatur erwärmt wird, welche zwischen der Übergangstemperatur und der Schmelztemperatur liegt.

7. Verfahren wie in Anspruch 6 beansprucht, wobei diese Temperatur grob auf der Hälfte zwischen der Übergangstemperatur und der Schmelztemperatur liegt.

8. Verfahren wie in einem der vorhergehenden Ansprüche beansprucht, wobei der Aufbringungsschritt durch Verdampfen des Parfüms in dem Ofen erfolgt.

9. Verfahren wie in einem der vorhergehenden Ansprüche beansprucht, wobei der Aufbringungsschritt durch Zerstäubung des Parfüms auf den erwärmten Teil des Plastikelements durchgeführt wird.

10. Verfahren wie in einem der vorhergehenden Ansprüche beansprucht, wobei der Teil des Plastikelements vor Erwärmen vom Rest des Elements isoliert wird und in einem Ofen platziert wird.

## Revendications

1. Procédé pour parfumer un élément plastique, dans lequel le procédé comprend les étapes successives suivantes de :
- chauffage d'au moins une portion de l'élément plastique dans un four à une température de plus de 60 degrés Celsius ;
- application d'un parfum à la portion chauffée de l'élément plastique ;
- refroidissement de la portion chauffée de l'élément plastique.

2. Procédé selon la revendication 1, dans lequel l'élément plastique est un composant d'une paire de lunettes.

3. Procédé selon la revendication 2, dans lequel les lentilles sont enlevées de la monture de lunettes avant l'étape de chauffage.

4. Procédé selon l'une quelconque des revendications précédentes, dans lequel l'élément plastique est chauffé à une température de, de manière davantage préférée, plus de 80 degrés Celsius, de manière davantage préférée plus de 100 degrés Celsius, et de moins de 300 degrés Celsius, de préférence de moins de 200 degrés Celsius, de manière davantage préférée de moins de 150 degrés Celsius.

5. Procédé selon l'une quelconque des revendications 1 à 3, dans lequel l'élément plastique est thermoplastique et est chauffé à une température se situant en dessous de la température de fusion du plastique et à moins de 50 degrés Celsius de celle-ci, de préférence à moins de 30 degrés Celsius de celle-ci.

6. Procédé selon l'une quelconque des revendications 1 à 3, dans lequel l'élément plastique est chauffé à une température se situant entre la température de transition et la température de fusion.

7. Procédé selon la revendication 6, dans lequel ladite température se situe à peu près à michemin entre la température de transition et la température de fusion.

8. Procédé selon l'une quelconque des revendications précédentes, dans lequel l'étape d'application est réalisée par évaporation du parfum dans le four.

9. Procédé selon l'une quelconque des revendications 1 à 7, dans lequel l'étape d'application est réalisée en atomisant le parfum sur la portion chauffée de l'élément plastique.

10. Procédé selon l'une quelconque des revendications précédentes, dans lequel la portion de l'élément plastique est isolée du reste de l'élément avant chauffage, et placée dans un four.
